# EUROPÄISCHE PATENTSCHRIFT

(11) **EP 1 344 409 B1**
(45) Veröffentlichungstag und Bekanntmachung des Hinweises auf die Patenterteilung: **27.07.2005**
(21) Anmeldenummer: 01271763.3
(22) Anmeldetag: 13.12.2001
(51) Int. Cl.: H04Q 3/00

(54) **VERFAHREN ZUM ERKENNEN VON IDENTIFIKATIONSMUSTERN**
METHOD FOR IDENTIFYING MARKERS
PROCEDE DE RECONNAISSANCE DE MOTIFS D'IDENTIFICATION

(30) Priorität: 18.12.2000 DE 10063079
(43) Veröffentlichungstag der Anmeldung: 17.09.2003
(73) Patentinhaber: Infineon Technologies AG, 81669 München (DE)
(72) Erfinder: STEGER, Johann, 81547 München (DE); WEBER, Michael, 85354 Freising (DE)
(74) Vertreter: Barth, Stephan Manuel, Dr.
(86) Internationale Anmeldenummer: PCT/EP2001/014700
(87) Internationale Veröffentlichungsnummer: WO 2002/051168

(56) Entgegenhaltungen:
- US-A- 5 499 246
- US-A- 5 905 733

## Beschreibung

Die vorliegende Erfindung betrifft ein Verfahren zum Erkennen von Identifikationsmustern und insbesondere ein Verfahren, das in einem oder mehreren Signalisierungsrahmen alle wichtigen Identifikationsmuster erkennt.

Die Signalisierung wird in Signalisierungsrahmen bereitgestellt, die wiederum in einem Datenband anstelle von Sprachrahmen gesendet werden.

Ein Datenempfänger - im folgenden kurz als "Empfänger" bezeichnet - muß zwischen den oben genannten Signalisierungsrahmen und den Sprachrahmen unterscheiden können.

Diese Unterscheidung wird bei den Verfahren nach dem Stand der Technik mit Hilfe von spezifischen Identifikationsmustern (auch als "Marker" bezeichnet) durchgeführt. In herkömmlichen Datenübertragungskanälen ist ein Protokoll für eine Signalisierung spezifiziert. Die Signalisierung wird beispielsweise verwendet für
a) eine Festlegung von unterschiedlichen Datenraten;
b) eine Umschaltung zwischen unterschiedlichen Datenraten; und
c) eine DTX- (Diskrete Überbertragungs-) Handhabung.

Allgemein müssen bei einer gemischten digitalen Übertragung von Sprachdaten und anderen Daten in einem entsprechenden Empfänger empfangene Datenblöcke analysiert werden. Um Rechenzeit zu sparen und eine hohe Übertragungsrate sicherzustellen, muß diese Analyse empfängerseitig möglichst effizient und schnell durchgeführt werden.

Herkömmliche empfängerseitige Analysesysteme nutzen zur Unterscheidung von Datenblöcken, die nur eine Sprachinformation übertragen und somit nachstehend als Sprachblöcke bezeichnet werden, und Datenblöcken, die sonstige Daten oder empfängerspezifische Informationen, wie die Umschaltung zwischen verschiedenen Sprachcodes, übertragen und somit nachstehend als Signalisierungsblöcke bezeichnet werden, spezifische Identifikationsmuster oder "Marker", um Signalisierungsrahmen, die in den Signalisierungsblöcken enthalten sind, zu erkennen.

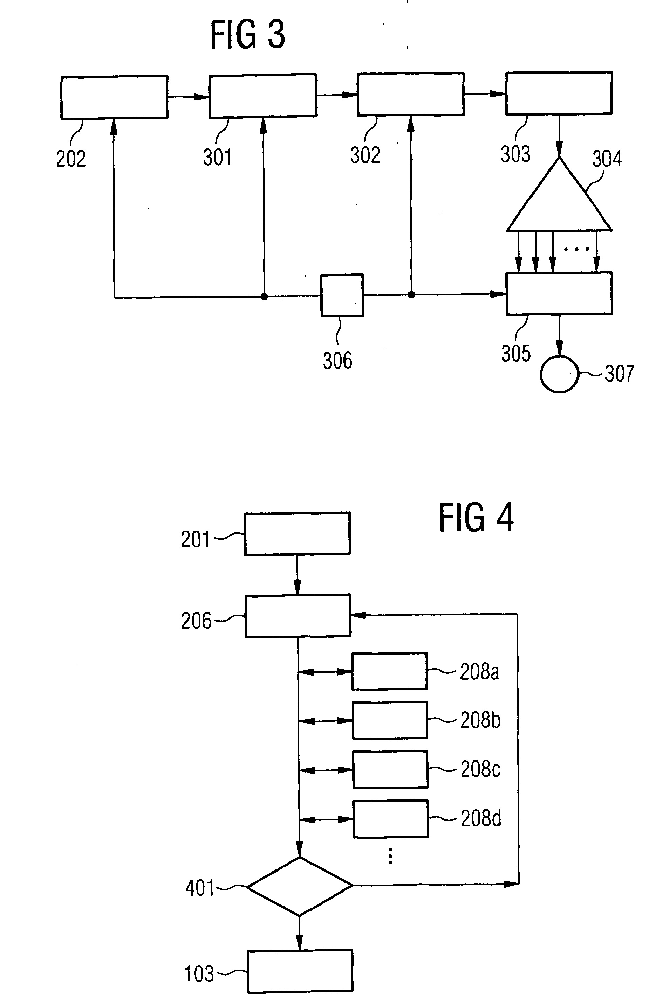

Fig. 4 zeigt ein schematisches Ablaufdiagramm eines Verfahrens zum Erkennen von Identifikationsmustern nach dem Stand der Technik, wobei empfangene Datenblöcke 201 sequentiell in Vollraten-Signalisierungblöcken 206, wobei Vollraten-Signalisierungsrahmen 208a-d nacheinander nach Identifikationsmustern abgesucht werden. 401 bezeichnet hierbei eine Entscheidungseinrichtung für einen Rücksprung zum nächsten Vollraten-Signalisierungsblock 206, und 103 bezeichnet einen Ergebnisausgabeschritt.

Dieses Verfahren weist den Hauptnachteil auf, daß nach jedem Signalisierungsrahmen getrennt gesucht werden muß, wodurch sich infolge einer langen Rechenzeit ein großer Zeitverlust ergibt.

Ein weiterer Nachteil herkömmlicher Verfahren besteht in der Notwendigkeit, daß ein Deinterleaving und eine Erkennung von Identifikationsmustern mehrmals durchgeführt werden muß.

Noch ein weiterer Nachteil herkömmlicher Verfahren besteht darin, daß nach sämtlichen Signalisierungsrahmen getrennt gesucht werden muß.

Ein anderes Beispiel ist aus US-A-5 905 733 bekannt.

Das erfindungsgemäße Verfahren gemäß Anspruch 1 weist den Hauptvorteil auf, daß Identifikationsmuster in Signalisierungsrahmen mittels einer einzigen Korrelation erkannt werden, wodurch sich eine Suche in jedem Signalisierungsrahmen und ein mehrfaches Durchführen eines Deinterleaving und einer Erkennung von Identifikationsmustern erübrigt, so daß eine beträchtliche Rechenzeit gespart werden kann.

Kern der Erfindung ist Verfahren zum Erkennen von Identifikationsmustern in Datenblöcken, die mittels Empfängern empfangen worden sind, zur Unterscheidung zwischen Sprachrahmen und Signalisierungsrahmen, wobei eine Korrelation mit vorgegebenen Referenzmustern aufgeteilt wird und Symmetrien in den zu analysierenden Referenzmustern zur Erkennung ausgenutzt werden.

In den Unteransprüchen finden sich vorteilhafte Weiterbildungen und Verbesserungen des jeweiligen Gegenstandes der Erfindung.

Gemäß einer bevorzugten Weiterbildung des erfindungsgemäßen Verfahrens müssen zueinander invertierte Identifikationsmuster zum Einsparen von Rechenzeit nur einmal ausgewertet werden.

Gemäß einer weiteren bevorzugten Weiterbildung des erfindungsgemäßen Verfahrens sind einer oder mehrere der übertragenen Datenblöcke Sprachblöcke, die Sprachrahmen enthalten.

Gemäß noch einer weiteren bevorzugten Weiterbildung des erfindungsgemäßen Verfahrens sind einer oder mehrere der Datenblöcke Signalisierungsblöcke, die Signalisierungsrahmen enthalten.

Gemäß noch einer weiteren bevorzugten Weiterbildung des erfindungsgemäßen Verfahrens wird ein Deinterleaving nur einmal ausgeführt.

Gemäß noch einer weiteren bevorzugten Weiterbildung des erfindungsgemäßen Verfahrens enthält ein Vollraten-Signalisierungsblock einen oder mehrere Typen von Vollraten-Signalisierungsrahmen.

Gemäß noch einer weiteren bevorzugten Weiterbildung des erfindungsgemäßen Verfahrens enthält ein Halbraten-Signalisierungsblock einen oder mehrere Typen von Halbraten-Signalisierungsrahmen.

Gemäß noch einer weiteren bevorzugten Weiterbildung des erfindungsgemäßen Verfahrens wird eine Entscheidung über eine Verwendung eines berechneten Korrelationswerts durch eine Ablaufsteuerung herbeigeführt.

Gemäß noch einer weiteren bevorzugten Weiterbildung des erfindungsgemäßen Verfahrens wird ein Sprachblock durch einen Vollraten-Sprachblock übertragen.

Gemäß noch einer weiteren bevorzugten Weiterbildung des erfindungsgemäßen Verfahrens wird ein Sprachblock durch einen Halbraten-Sprachblock übertragen.

Ausführungsbeispiele der Erfindung sind in den Zeichnungen dargestellt und in der nachfolgenden Beschreibung näher erläutert.

In den Zeichnungen zeigen:
- Fig. 1: ein Ablaufdiagramm des Verfahrens zum Erkennen von Identifikationsmustern gemäß der vorliegenden Erfindung;
- Fig. 2: ein Blockbild, das eine Übertragung von Datenblöcken zu einem Empfänger veranschaulicht, und eine Übersicht über den Inhalt von Datenblöcken gibt;

- Fig. 3: ein Blockbild, das eine Vorrichtung zum Erkennen von Identifikationsmustern gemäß der vorliegenden Erfindung zeigt; und
- Fig. 4: ein Ablaufdiagramm eines Verfahrens zum Erkennen von Identifikationsmustern nach dem Stand der Technik.

In den Figuren bezeichnen gleiche Bezugszeichen gleiche oder funktionsgleiche Komponenten bzw. Ablaufblöcke des erfindungsgemäßen Verfahrens.

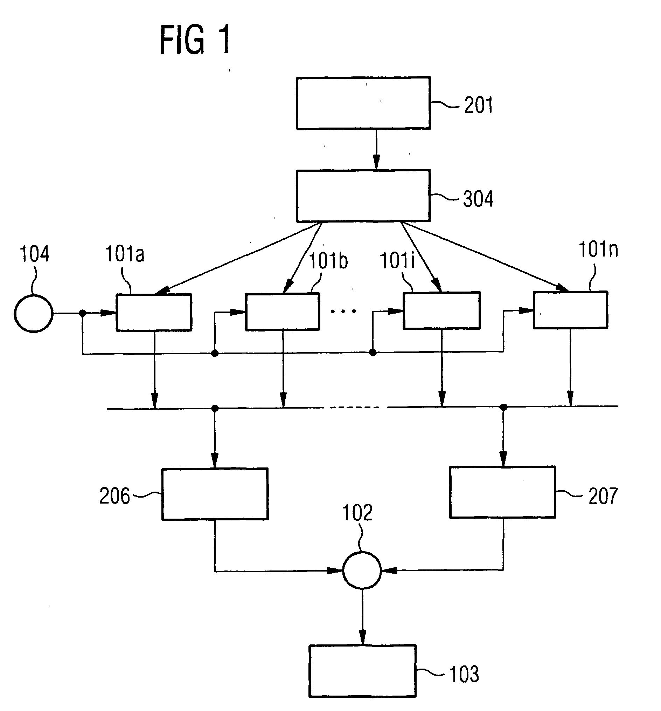

Fig. 1 zeigt ein Ablaufdiagramm des Verfahrens zum adaptiven Erkennen von Identifikationsmustern in Datenblöcken, um Signalisierungsrahmen zu bestimmen, gemäß der vorliegenden Erfindung, wobei bei dem gezeigten Ablauf die Untersuchung eines Datenblocks, hier des Datenblocks 201b, beispielhaft erläutert ist.

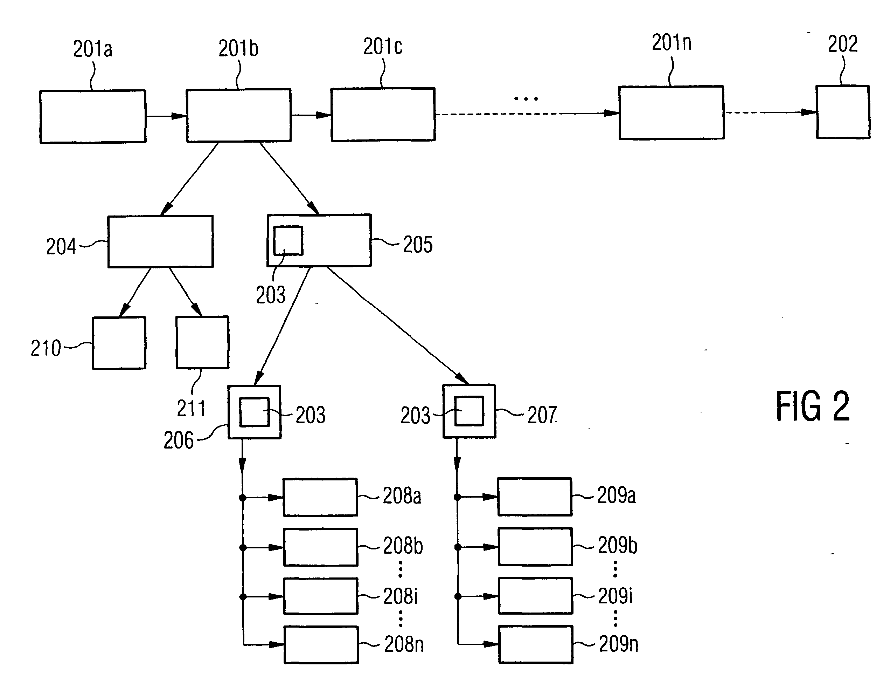

Eine Reihe von Datenblöcken 201a - 201n (Fig. 2), wobei der Index n die maximale Anzahl von betrachteten Datenblöcken angibt, werden von einem Sender (nicht gezeigt) zu einem Empfänger 202 (Fig. 2) übertragen. Die Datenblöcke können entweder eine Sprachinformation oder eine Signalisierungsinformation enthalten. Aufgrund der unterschiedlichen Anforderungen an eine Weiterverarbeitung der Daten je nachdem, ob es sich um eine Sprachinformation oder um eine Signalisierungsinformation handelt, muß zwischen Datenblöcken, die eine Sprachinformation enthalten, und Datenblöcken, die eine Signalisierungsinformation enthalten, zuverlässig unterschieden werden.

Hierzu wird weiterhin Bezug genommen auf Fig. 2, in welcher ein Blockbild gezeigt ist, das eine Übertragung von Datenblöcken zu einem Empfänger veranschaulicht, und eine Übersicht über den Inhalt von Datenblöcken gibt. Nach einem Empfangen eines spezifischen Datenblocks aus der Reihe von Datenblöcken 201a bis 201n wird dieser spezifische Datenblock analysiert, um zu bestimmen, ob dieser spezifische Datenblock, der als ein Datenblock 201b in Fig. 2 gezeigt ist, ein Identifikationsmuster 203 enthält oder nicht.

Anschließend wird ein Datenblock, der kein Identifikationsmuster 203 enthält, als ein Sprachblock 204 identifiziert und entsprechend der Erfordernisse einer Sprachinformationsverarbeitung weiterverarbeitet. Im Gegensatz dazu wird ein Datenblock, der ein Identifikationsmuster 203 enthält, als ein Signalisierungsblock 205 identifiziert. Weiterhin erfolgt eine Suche nach Identifikationsmustern in einem Vollraten-Signalisierungsblock 206, der mit einer Vollrate übertragen wird und eine Suche nach Identifikationsmustern in einem Halbraten-Signalisierungsblock 207, der mit einer Halbrate übertragen wird.

Nach dem Verfahren gemäß dieser Ausführungsform erfolgt die Suche nach den jeweiligen Identifikationsmustern mittels eines Korrelationsverfahrens, wobei die Korrelation in Einzelkorrelationsschritte 101a bis 101n unter Verwendung einer Korrelationsaufteilungseinrichtung 304 (Fig. 3) aufgeteilt wird. Hierbei wird für die Einzelkorrelationsschritte 101a bis 101n ein vorbestimmtes Referenzmuster 104 bereitgestellt und in den Einzelkorrelationsschritten 101a bis 101n gleichzeitig verarbeitet. Diese Vorgehensweise beschleunigt einen Erkennungsvorgang von Identifikationsmustern beträchtlich gegenüber Verfahren nach dem Stand der Technik, bei welchen vollständige Korrelationen nacheinander ausgeführt werden müssen, wie obenstehend unter Bezugnahme auf Fig. 4 erläutert. Nach einem Aufteilen der Korrelation in Unterbereiche, die jeweils mit dem vorbestimmten Referenzmuster 104 - gleichzeitig - korreliert werden, werden einzelne Vollraten-Signalisierungsrahmen 208a bis 208n in den Vollraten-Signalisierungsblöcken 206 und/oder Halbraten-Signalisierungsrahmen 209a bis 209n den Halbraten-Signalisierungsblöcken 207 aufgefunden, worauf Korrelationswerte 307 (Fig. 3) zum Anzeigen von gefundenen Signalisierungsrahmen ausgegeben werden.

Eine Entscheidung darüber, welcher Korrelationswert benutzt wird, wird von einer in Fig. 3 gezeigten Ablaufsteuerung 306 bereitgestellt.

Fig. 3 zeigt ein Blockbild, das eine Vorrichtung zur adaptiven Erkennung von Identifikationsmustern in Datenblöcken zum Bestimmen von Signalisierungsrahmen zeigt. Ein zu analysierender Datenblock 201 wird, wobei in diesem Ausführungsbeispiel angenommen wird, daß irgendeiner der Datenblöcke 201a bis 201n analysiert werden kann, nach dem Empfang durch den Empfänger 202 zu einer Analyseeinrichtung 301 ausgegeben. Die Analyseeinrichtung 301 analysiert einen spezifischen Datenblock aus der Reihe von Datenblöcken 201a - 201n, um zu bestimmen, ob der spezifische Datenblock ein Identifikationsmusters 203 enthält oder nicht. Anschließend wird der spezifische Datenblock einer Identifikationseinrichtung 302 zugeführt, um einen Datenblock, der kein Identifikationsmuster 203 enthält, als einen Sprachblock 204 zu identifizieren, und einen Datenblocks, der ein Identifikationsmuster 203 enthält, als einen Signalisierungsblock 205 zu identifizieren.

Das Ausgangssignal der Identifikationseinrichtung 302 wird darauffolgend einer Korrelationseinrichtung 303 zugeführt, um nach Identifikationsmustern in einem Vollraten-Signalisierungsblock 206, der mit einer Vollrate übertragen wird und nach Identifikationsmustern in einem Halbraten-Signalisierungsblock 207, der mit einer Halbrate übertragen wird, die in dem Vollraten-Signalisierungsblock 206 und/oder dem Halbraten-Signalisierungsblock 207 enthalten sind, mittels einer Korrelation mit Referenzmustern 104 zu suchen. Anschließend teilt eine Korrelationsaufteilungseinrichtung 304 den Korrelationsvorgang in Unterbereiche auf, die wiederum mit einem vorbestimmten Referenzmuster korreliert werden, um Signalisierungsrahmen in den Vollraten-Signalisierungsblöcken 206 und/oder den Halbraten-Signalisierungsblöcken 207 aufzufinden.

Eine Ausgabeeinrichtung 305 dient zum Ausgeben von Korrelationswerten, um die gefundenen Signalisierungsrahmen anzuzeigen. Eine Ablaufsteuerung 306 steuert einen Betriebsablauf und entscheidet, wie zuvor erwähnt, welche Korrelationswerte 307 in einem aktuellen Zustand ausgegeben werden.

Obwohl die vorliegende Erfindung vorstehend anhand bevorzugter Ausführungsbeispiele beschrieben wurde, ist sie darauf nicht beschränkt, sondern auf vielfältige Weise modifizierbar.

### Bezugszeichenliste

In den Figuren bezeichnen gleiche Bezugszeichen gleiche oder funktionsgleiche Komponenten.
- 101a, ..., 101n: Einzelkorrelationsschritte
- 102: Auswertungsschritt
- 103: Ergebnisausgabeschritt
- 104: Referenzmuster
- 201, 201a, ..., 201n: Datenblöcke
- 202: Empfänger
- 203: Identifikationsmuster
- 204: Sprachblock
- 205: Signalisierungsblock
- 206: Vollraten-Signalisierungsblock
- 207: Halbraten-Signalisierungsblock
- 208a, ..., 208n: Vollraten-Signalisierungsrahmen
- 209a, ..., 209n: Halbraten-Signalisierungsrahmen
- 210: Vollraten-Sprachblock
- 211: Halbraten-Sprachblock
- 301: Analyseeinrichtung
- 302: Identifikationseinrichtung
- 303: Korrelationseinrichtung
- 304: Korrelationsaufteilungseinrichtung
- 305: Ausgabeeinrichtung
- 306: Ablaufsteuerung
- 307: Korrelationswerte
- 401: Entscheidungseinrichtung

## Patentansprüche

1. Verfahren zum Erkennen von Identifikationsmustern in Datenblöcken zum Bestimmen von Signalisierungsrahmen, mit den Schritten:
a) Empfangen einer Reihe von Datenblöcken (201a - 201n) in einem Empfänger (202);
b) Analysieren eines spezifischen Datenblocks aus der Reihe von Datenblöcken (201a - 201n) zum Bestimmen, ob der spezifische Datenblock ein Identifikationsmusters (203) enthält;
c) Identifikation eines Datenblocks, der kein Identifikationsmuster (203) enthält, als einen Sprachblock (204);
d) Identifikation eines Datenblocks, der ein Identifikationsmuster (203) enthält, als einen Signalisierungsblock (205);
e) Suchen nach Identifikationsmustern in einem Vollraten-Signalisierungsblock (206), der mit einer Vollrate übertragen wird;
f) Suchen nach Identifikationsmustern in einem Halbraten-Signalisierungsblock (207), der mit einer Halbrate übertragen wird;
g) Bereitstellen eines vorbestimmten Referenzmusters für eine Korrelation;
h) Aufteilen der Korrelation in Unterbereiche, die wiederum mit einem vorbestimmten Referenzmuster korreliert werden, zum Auffinden von Signalisierungsrahmen in den Vollraten-Signalisierungsblöcken (206) und/oder den Halbraten-Signalisierungsblöcken (207); und
i) Ausgeben von Korrelationswerten (307) zum Anzeigen von gefundenen Signalisierungsrahmen.

2. Verfahren nach Anspruch 1,
**dadurch gekennzeichnet,**
**dass** zueinander invertierte Identifikationsmuster zum Einsparen von Rechenzeit nur einmal ausgewertet werden.

3. Verfahren nach einem oder beiden der Ansprüche 1 und 2,
**dadurch gekennzeichnet,**
**dass** eine Entscheidung darüber, welcher Korrelationswert benutzt wird, von einer Ablaufsteuerung (306) bereitgestellt wird.

4. Verfahren nach einem oder mehreren der Ansprüche 1 bis 3,
**dadurch gekennzeichnet,**
**dass** einer oder mehrere der Datenblöcke (201a - 201n) Sprachblöcke sind, die Sprachrahmen enthalten.

5. Verfahren nach einem oder mehreren der Ansprüche 1 bis 3,
**dadurch gekennzeichnet,**
**dass** einer oder mehrere der Datenblöcke (201a - 201n) Signalisierungsblöcke sind, die Signalisierungsrahmen enthalten.

6. Verfahren nach einem oder mehreren der Ansprüche 1 bis 3,
**dadurch gekennzeichnet,**
**dass** ein Deinterleaving nur einmal ausgeführt wird.

7. Verfahren nach einem oder mehreren der Ansprüche 1 bis 3,
**dadurch gekennzeichnet,**
**dass** der Vollraten-Signalisierungsblock (206) einen oder mehrere Typen von Vollraten-Signalisierungsrahmen (208a - 208n) enthält.

8. Verfahren nach einem oder mehreren der Ansprüche 1 bis 3,
**dadurch gekennzeichnet,**
**dass** der Halbraten-Signalisierungsblock (207) einen oder mehrere Typen von Halbraten-Signalisierungsrahmen (209a - 209n) enthält.

9. Verfahren nach einem oder mehreren der Ansprüche 1 bis 3,
**dadurch gekennzeichnet,**
**dass** eine Entscheidung über eine Verwendung eines berechneten Korrelationswerts durch eine Ablaufsteuerung herbeigeführt wird.

10. Verfahren nach einem oder mehreren der Ansprüche 1 bis 3,
**dadurch gekennzeichnet,**
**dass** ein Sprachblock (204) durch einen Vollraten-Sprachblock (210) übertragen wird.

11. Verfahren nach einem oder mehreren der Ansprüche 1 bis 3,
**dadurch gekennzeichnet,**
**dass** ein Sprachrahmen (204) durch einen Halbraten-Sprachblock (211) übertragen wird.

12. Vorrichtung zur Erkennung von Identifikationsmustern in Datenblöcken zum Bestimmen von Signalisierungsrahmen, mit:
a) einem Empfänger (202) zum Empfangen einer Reihe von Datenblöcken (201a - 201n);
b) einer Analyseeinrichtung (301) zum Analysieren eines spezifischen Datenblocks aus der Reihe von Datenblöcken (201a - 201n) zum Bestimmen, ob der spezifische Datenblock ein Identifikationsmusters (203) enthält;
c) einer Identifikationseinrichtung (302) zur Identifikation eines Datenblocks, der kein Identifikationsmuster (203) enthält, als einen Sprachblock (204) und zur Identifikation eines Datenblocks, der ein Identifikationsmuster (203) enthält, als einen Signalisierungsblock (205);
d) einer Korrelationseinrichtung (303) zum Suchen nach Identifikationsmustern (203) in einem Vollraten-Signalisierungsblock (206), der mit einer Vollrate übertragen wird, und zum Suchen nach Identifikationsmustern (203), die in einem Halbraten-Signalisierungsblock (207), der mit einer Halbrate übertragen wird, enthalten sind, mittels einer Korrelation mit einem Referenzmuster (104);
e) einer Korrelationsaufteilungseinrichtung (304) zum Aufteilen der Korrelation in Unterbereiche, die wiederum mit einem vorbestimmten Referenzmuster korreliert werden, zum Auffinden von Signalisierungsrahmen in den Vollraten-Signalisierungsblöcken (206) und/oder den Halbraten-Signalisierungsblöcken (207);
f) einer Ausgabeeinrichtung (305) zum Ausgeben von Korrelationswerten (307) zum Anzeigen von gefundenen Signalisierungsrahmen; und
g) einer Ablaufsteuerung (306) zum Steuern eines Betriebsablaufs und zum Entscheiden, welche Korrelationswerte (307) in einem aktuellen Zustand ausgegeben werden.

## Claims

1. Method for recognition of identification patterns in data blocks in order to determine signalling frames, comprising the following steps:
a) Reception of a series of data blocks (201a - 201n) in a receiver (202);
b) Analysis of a specific data block from the series of data blocks (201a - 201n) in order to determine whether the specific data block contains an identification pattern (203);
c) Identification of a data block which does not contain an identification pattern (203) as a speech block (204);
d) Identification of a data block which does contain an identification pattern (203) as a signalling block (205);
e) Search for identification patterns in a full rate signalling block (206) which is transmitted at a full rate;
f) Search for identification patterns in a half rate signalling block (207) which is transmitted at a half rate;
g) Provision of a predetermined reference pattern for correlation;
h) Subdivision of the correlation into subareas, which in turn are correlated by a predetermined reference pattern, in order to find signalling frames in the full rate signalling blocks (206) and/or in the half rate signalling blocks (207); and
i) Outputting of correlation values (307) in order to indicate signalling frames which have been found.

2. Method according to Claim 1,
**characterized**
**in that** mutually inverted identification patterns are evaluated only once, in order to save computation time.

3. Method according to one or both of Claims 1 and 2,
**characterized**
**in that** a sequence controller (306) makes a decision on which correlation value is used.

4. Method according to one or more of Claims 1 to 3,
**characterized**
**in that** one or more of the data blocks (201a - 201n) is a speech block or are speech blocks which contains or contain a speech frame or speech frames.

5. Method according to one or more of Claims 1 to 3,
**characterized**
**in that** one or more of the data blocks (201a - 201n) is a signalling block or are signalling blocks which contains or contain a signalling frame or signalling frames.

6. Method according to one or more of Claims 1 to 3,
**characterized**
**in that** deinterleaving is carried out only once.

7. Method according to one or more of Claims 1 to 3,
**characterized**
**in that** the full rate signalling block (206) contains one or more types of full rate signalling frames (208a - 208n).

8. Method according to one or more of Claims 1 to 3,
**characterized**
**in that** the half rate signalling block (207) contains one or more types of half rate signalling frames (209a - 209n).

9. Method according to one or more of Claims 1 to 3,
**characterized**
**in that** a sequence controller decides whether to use a calculated correlation value.

10. Method according to one or more of Claims 1 to 3,
**characterized**
**in that** a speech block (204) is transmitted by means of a full rate speech block (210).

11. Method according to one or more of Claims 1 to 3,
**characterized**
**in that** a speech frame (204) is transmitted by means of a half rate speech block (211).

12. Apparatus for recognition of identification patterns in data blocks in order to determine signalling frames, having:
a) a receiver (202) for receiving a series of data blocks (201a - 201n);
b) an analysis device (301) for analysis of a specific data block from the series of data blocks (201a - 201n) in order to determine whether the specific data block contains an identification pattern (203);
c) an identification device (302) for identification of a data block which does not contain an identification pattern (203) as a speech block (204), and for identification of a data block which does contain an identification pattern (203) as a signalling block (205);
d) a correlation device (303) for searching for identification patterns (203) in a full rate signalling block (206) which is transmitted at a full rate, and for searching for identification patterns (203) which are contained in a half rate signalling block (207) which is transmitted at a half rate, by means of correlation with a reference pattern (104);
e) a correlation subdivision device (304) for subdividing the correlation into subareas, which in turn are correlated with a predetermined reference pattern, in order to find signalling frames in the full rate signalling blocks (206) and/or in the half rate signalling blocks (207);
f) an output device (305) for outputting correlation values (307) in order to indicate signalling frames which have been found; and
g) a sequence controller (306) for controlling an operating sequence and for deciding which correlation values (307) are output in a current state.

## Revendications

1. Procédé de reconnaissance de motifs d'identification dans des blocs de données pour déterminer des trames de signalisation, comprenant les étapes :
a) réception d'une série de blocs de données (201a - 201n) dans un récepteur (202) ;
b) analyse d'un bloc de données spécifique issu de la série de blocs de données (201a - 201n) pour déterminer si le bloc de données spécifique contient un motif d'identification (203) ;
c) identification d'un bloc de données ne contenant aucun motif d'identification (203) comme un bloc de parole (204) ;
d) identification d'un bloc de données contenant un motif d'identification (203) comme un bloc de signalisation (205);
e) recherche de motifs d'identification dans un bloc de signalisation plein-débit (206) qui est transmis avec un plein-débit ;
f) recherche de motifs d'identification dans un bloc de signalisation demi-débit (207) qui est transmis avec un demi-débit ;
g) mise à disposition d'un motif de référence prédéterminé pour une corrélation ;
h) division de la corrélation en sous-zones qui sont corrélées à leur tour avec un motif de référence prédéterminé, pour trouver des trames de signalisation dans les blocs de signalisation plein-débit (206) et/ou dans les blocs de signalisation demi-débit (207) ; et
i) sortie de valeurs de corrélation (307) pour indiquer des trames de signalisation trouvées.

2. Procédé selon la revendication 1, **caractérisé en ce que** des motifs d'identification inversés l'un par rapport à l'autre ne sont évalués qu'une seule fois pour limiter le temps de calcul.

3. Procédé selon l'une des deux ou les deux revendications 1 et 2, **caractérisé en ce qu'**une décision sur la valeur de corrélation à utiliser est fournie par un contrôleur de déroulement (306).

4. Procédé selon l'une ou plusieurs des revendications 1 à 3, **caractérisé en ce qu'**un ou plusieurs des blocs de données (201a - 201n) sont des blocs de parole qui contiennent des trames de parole.

5. Procédé selon l'une ou plusieurs des revendications 1 à 3, **caractérisé en ce qu'**un ou plusieurs des blocs de données (201a - 201n) sont des blocs de signalisation qui contiennent des trames de signalisation.

6. Procédé selon l'une ou plusieurs des revendications 1 à 3, **caractérisé en ce qu'**un deinterleaving n'est réalisé qu'une seule fois.

7. Procédé selon l'une ou plusieurs des revendications 1 à 3, **caractérisé en ce que** le bloc de signalisation plein-débit (206) contient un ou plusieurs types de trames de signalisation plein-débit (208a - 208n).

8. Procédé selon l'une ou plusieurs des revendications 1 à 3, **caractérisé en ce que** le bloc de signalisation demi-débit (207) contient un ou plusieurs types de trames de signalisation demi-débit (209a - 209n).

9. Procédé selon l'une ou plusieurs des revendications 1 à 3, **caractérisé en ce qu'**une décision sur une utilisation d'une valeur de corrélation calculée est prise par un contrôleur de déroulement.

10. Procédé selon l'une ou plusieurs des revendications 1 à 3, **caractérisé en ce qu'**un bloc de parole (204) est transmis par un bloc de parole plein-débit (210).

11. Procédé selon l'une ou plusieurs des revendications 1 à 3, **caractérisé en ce qu'**une trame de parole (204) est transmise par un bloc de parole demi-débit (211).

12. Dispositif de reconnaissance de motifs d'identification dans des blocs de données pour déterminer des trames de signalisation, comprenant :
a) un récepteur (202) pour recevoir une série de blocs de données (201a - 201n) ;
b) un dispositif d'analyse (301) pour analyser un bloc de données spécifique issu de la série de blocs de données (201a - 201n) afin de déterminer si le bloc de données spécifique contient un motif d'identification (203) ;
c) un dispositif d'identification (302) pour identifier un bloc de données ne contenant aucun motif d'identification (203) comme un bloc de parole (204) et pour identifier un bloc de données contenant un motif d'identification (203) comme un bloc de signalisation (205);
d) un dispositif de corrélation (303) pour rechercher des motifs d'identification (203) dans un bloc de signalisation plein-débit (206), transmis avec un plein-débit, et pour rechercher des motifs d'identification (203) qui sont contenus dans un bloc de signalisation demi-débit (207), transmis avec un demi-débit, au moyen d'une corrélation avec un motif de référence (104);
e) un dispositif de division de corrélation (304) pour diviser la corrélation en sous-zones qui sont corrélées à leur tour avec un motif de référence prédéterminé, afin de trouver des trames de signalisation dans les blocs de signalisation plein-débit (206) et/ou dans les blocs de signalisation demi-débit (207) ;
f) un dispositif de sortie (305) pour sortir des valeurs de corrélation (307) afin d'indiquer des trames de signalisation trouvées ; et
g) un contrôleur de déroulement (306) pour commander un déroulement opératoire et pour décider quelles valeurs de corrélation (307) sont sorties dans un état courant.
